# EUROPEAN PATENT SPECIFICATION

(11) **EP 2 925 926 B1**
(45) Date of publication and mention of the grant of the patent: **06.07.2016**
(21) Application number: 13795768.4
(22) Date of filing: 26.11.2013
(51) Int. Cl.: D06F 58/28, D06F 33/02, D06F 37/30

(54) **A LAUNDRY TREATING MACHINE WITH AN ELECTRIC MOTOR AND AN INVERTER CONTROL DEVICE**
WÄSCHEBEHANDLUNGSMASCHINE MIT EINEM ELEKTROMOTOR UND EINER WECHSELRICHTERSTEUERUNGSVORRICHTUNG
MACHINE DE TRAITEMENT DU LINGE AVEC UN MOTEUR ÉLECTRIQUE ET DISPOSITIF DE COMMANDE D'ONDULEUR

(30) Priority: 30.11.2012 EP 12194962
(43) Date of publication of application: 07.10.2015
(73) Proprietor: Electrolux Home Products Corporation N.V., 1130 Brussels (BE)
(72) Inventor: DAL BEN, Diego, I-33080 Porcia (PN) (IT); SANTAROSSA, Marco, I-33080 Porcia (PN) (IT); LORENC, Marcin, I-33080 Porcia (PN) (IT)
(74) Representative: Petruccelli, Davide
(86) International application number: PCT/EP2013/074743
(87) International publication number: WO 2014/082999

(56) References cited:
- EP-A1- 2 487 290
- US-A1- 2011 010 961

## Description

The present invention relates to a laundry treating machine comprising at least one electric motor and at least one inverter control device for controlling the rotational speed of said electric motor according to the preamble of claim 1.

A condense-type laundry dryer includes a closed air stream circuit, wherein an air stream for drying the laundry is circulated cyclically through the laundry drum containing laundry to be treated. Within the air stream circuit a heat exchanger of air-to-air type removes moisture from the air stream leaving the drum. The air-to-air heat exchanger acts as a condenser. A heating device, e.g. an electric heater, is provided in the air stream circuit for heating up the air stream after it has been dehumidified. An open cooling air circuit is provided for cooling the air-to-air heat exchanger.

A laundry dryer with a heat pump system includes a similar closed air stream circuit described above, but the air-to-air heat exchanger and the heating device are replaced by an evaporator and a condenser, respectively, of the heat pump system.

In the condense-type laundry dryer, the laundry drum, a cooling air fan of the condenser and a drying air stream fan are driven by the same asynchronous electric motor. In the laundry dryer with the heat pump system the laundry drum and the drying air stream fan are driven by the same electric motor. A further electric motor is provided for driving the compressor of the heat pump system.

In a washing machine or a washer-dryer an electric motor is provided for rotating the laundry drum in both directions of rotation.

The rotational speed of the electric motor depends on the electrical parameters, i.e. voltage, current and frequency, of the mains power supply, to which the electric motor is connected. In particular, a frequency change of the mains power supply alters the rotational speed of the electric motor. The drying and/or washing performances to be granted by the laundry treating machine are set with a nominal power supply frequency of 50 Hz. If the laundry treating machine has to be supplied with a higher power supply frequency, for instance 60 Hz, the rotational speed of the electric motor would modify the working conditions of the laundry treating machine, since the rotational speed of the laundry drum, the flow rate of the air stream, the flow rate of the cooling air and/or the flow rate compressed refrigerant would change, in particular increase. These modifications alter the laundry treating machine performances and may cause unwanted noise due to the air flow.

There is a need to adapt the laundry treating machine, since the power supply frequency is higher than the nominal power supply frequency in some countries. In order to adapt the laundry treating machine to be powered with a power supply frequency higher than the nominal power supply frequency without the need of resetting all the drying and/or washing cycles, a mechanical reducer may be installed to change the higher rotational speed of the electric motor into the nominal speed to be supplied to motor driven device(s). For example, the rotational speed that the motor would have at the nominal power supply frequency is adjusted. However, such solution has a longer assembly time, an increased number of components and the need of modifying the assembly line.

EP 2 487 290 A1 discloses a laundry dryer including an electric motor controlled by an inverter circuit for changing the rotational speed of said electric motor. However, this laundry dryer has no provisions for adapting the operation to different power supply frequencies. If the laundry dryer is supplied with a mains power supply frequency, which differs from the nominal mains power supply frequency, then the laundry dryer is prevented from operating for safety reasons. This is due to the fact that all the electric and electronic components for carrying out a treating process on a laundry mass are set for being operated with a nominal power supply frequency that needs to be univocally fixed. This requires the manufacturer to install an appropriate control unit for each frequency that is supposed to power the machine. This would determinate a complication in the machine assembly process.

It is an object of the present invention to provide a laundry treating machine, which overcomes the problems mentioned above.

The object of the present invention is achieved by the laundry treating machine according to claim 1.

According to the present invention the control unit comprises a detection device for detecting the frequency of a mains power supply connected to the laundry treating machine, wherein the control unit and/or the inverter control device control the electric motor on the basis of one or more operating parameters depending on the detected frequency of the mains power supply.

Operating parameters that are set depending on the detected frequency of the mains power supply may consist in the rotational speed of the motor, motor power consumption, motor activation/deactivation time periods or rate. Further operating parameters to control the electric motor and/or other electric/electronic components of the laundry drying machine such drying air or water electric heaters, switches, relays, sensors and so on, may include activation/deactivation periods of time elapsed from a predetermined status condition of the machine power supply, electric motor and/or other electric/electronic components of the laundry drying machine. In particular, the status condition of the machine power supply may be the zero-crossing condition of an alternating current/voltage over time, i.e., in other words, the instant of time in which the current/voltage of an alternating power supply is zero in a graph showing the course of current/voltage over time.

In this way it is possible not only to easy adapt the same laundry treating machine to different mains power supplies in different world areas thereby ensuring that the performance of the process to be carried out on laundry remains unchanged, but it is also possible to set specific operating parameters for each mains power supply so as to allow the same machine adapting processes to be carried out on laundry to local requirements or needs. For example, different motor activation/deactivation time periods or rate may be associated to each mains power supply frequency.

The core of the present invention is the adaption of the relevant parameters for operating the laundry treating machine to the detected frequency of the mains power supply. In particular, the inventive laundry treating machine may be provided for the main power supply frequencies of 50 Hz as well as of 60 Hz, for instance. The present invention allows an easy adaption of the same laundry treating machine to mains power supplies in different world areas. The control unit and/or the inverter control device may be realized by low complexity and by low costs. It is not necessary to provide different versions of the laundry treating machine for different frequencies of the mains power supply.

Furthermore, the control unit may control further electric and/or electronic components on the basis of one or more operating parameters depending on the detected frequency of the mains power supply.

In particular, the further electric and/or electronic components are provided for controlling, activating and/or deactivating functions of the laundry treating process.

For example, the further electric and/or electronic components are provided for controlling, activating and/or deactivating one or more detection devices and/or electronic diagnostic devices of the laundry treating machine.

Preferably, the control unit comprises at least one memory device, in which at least one program and/or data base are stored or storable, wherein said program and/or data base represent one or more correlations between the operating parameters and the frequency of the mains power supply.

For instance, the memory device is programmable by a manufacturer and/or installer of the laundry treating machine.

For safety reasons, the laundry treating machine may be activated by the control unit only, if the operating parameters are suitable for the detected frequency of the mains power supply.

In particular, the control unit is programmed or programmable for recognizing the actually detected frequency of the mains power supply and for adjusting the operational parameters according to the detected frequency of the mains power supply.

The control unit may be provided for adjusting the operational parameters according to a range between 50 Hz and 60 Hz for the detected frequency of the mains power supply.

Further, the control unit may be an integrated part of an electronic power board being in signal communication with a user interface of the laundry treating machine.

Moreover, the control unit may be provided for communicating a reference rotational speed signal to the inverter control device.

Preferably, the laundry treating machine includes at least one optical device for indicating the detected frequency of the mains power supply and/or the adjusted parameters.

In particular, the electric motor is provided for simultaneous driving the laundry drum and at least one fan.

For example, the laundry treating machine is a laundry dryer including a heat pump system.

According to another example, the laundry treating machine is a condense-type laundry dryer.

The novel and inventive features believed to be the characteristic of the present invention are set forth in the appended claims.

The invention will be described in further detail with reference to the drawings, in which
- FIG 1: illustrates a perspective view of a basement portion of a laundry treatment machine according to a first embodiment of the present invention,
- FIG 2: illustrates a perspective view of the basement portion of the laundry treatment machine according to a second embodiment of the present invention,
- FIG 3: illustrates another perspective view of the basement portion of the laundry treatment machine according to the second embodiment of the present invention,
- FIG 4: illustrates a perspective view of the basement portion with a laundry drum of the laundry treatment machine according to the first embodiment of the present invention,
- FIG 5: illustrates a perspective view of the laundry treatment machine with an open side wall according to the first embodiment of the present invention, and
- FIG 6: illustrates another perspective view of the laundry treatment machine with the open side wall according to the first embodiment of the present invention.

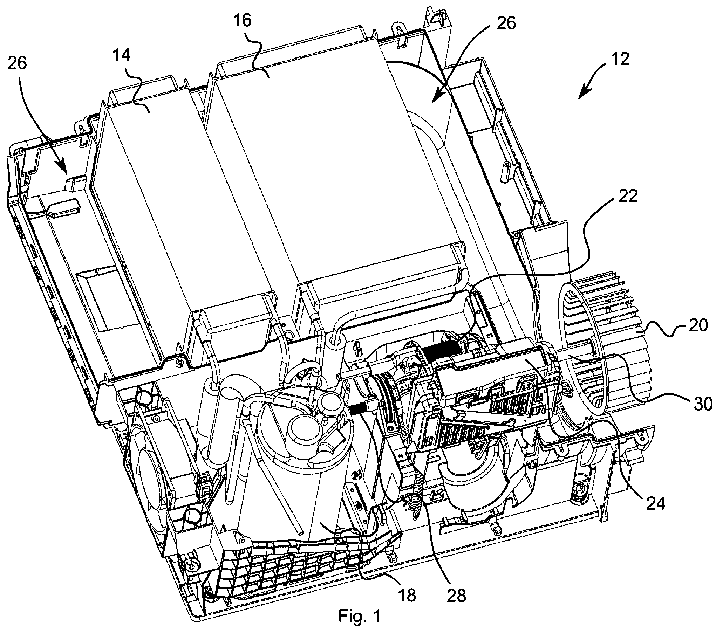

FIG 1 illustrates a perspective view of a basement portion 12 of a laundry treatment machine 10 according to a first embodiment of the present invention. The laundry treatment machine 10 according to a first embodiment is a laundry dryer including a heat pump system. The basement portion 12 is the lower part of the laundry treatment machine 10. The basement portion 12 is arranged below a laundry drum 40 of the laundry treatment machine 10.

The basement portion 12 includes a first air-to-refrigerant heat exchanger 14, a second air-to-refrigerant heat exchanger 16, a heat pump compressor 18, an air stream fan 20 and an air stream channel 26. The first air-to-refrigerant heat exchanger 14, the second air-to-refrigerant heat exchanger 16, the heat pump compressor 18, the air stream fan 20 and the air stream channel 26 are components of the heat pump system. Further, the basement portion 12 includes an electric motor 22 and an inverter control device 24. The inverter control device 24 is provided for controlling the electric motor 22.

The first air-to-refrigerant heat exchanger 14, the second air-to-refrigerant heat exchanger 16 and the heat pump compressor 18 are parts of a closed refrigerant circuit. The heat pump compressor 18 is electrically powered and compresses and heats up the refrigerant. The first air-to-refrigerant heat exchanger 14 acts as an evaporator, for instance. The first air-to-refrigerant heat exchanger 14 cools down and dehumidifies the air stream in the air stream channel 26, after said air stream has passed the laundry drum 40. At the same time, the first air-to-refrigerant heat exchanger 14 heats up and vaporises the refrigerant. The second air-to-refrigerant heat exchanger 16 acts as a condenser, for example. The second air-to-refrigerant heat exchanger 16 heats up the air stream in the air stream channel 26, before the air stream is reinserted into the laundry drum 40 again. At the same time, the second air-to-refrigerant heat exchanger 16 cools down and condenses the refrigerant.

A first shaft 28 and a second shaft 30 are connected to the electric motor 22. The first shaft 28 and the second shaft 30 are arranged on opposite sides of the electric motor 22. The first shaft 28 is provided for driving an endless belt 32 enclosing the laundry drum 40. The second shaft 30 is directly connected to the centre of the air stream fan 20. Thus, the electric motor 22 drives the laundry drum 40 and the drying air stream fan 20. The inverter control device 24 controls the rotation speed of the electric motor 22. The inverter control device 24 is controlled again by a control unit 52, which is not explicitly shown in FIG 1.

The control unit 52 comprises a detection device for detecting the frequency of a mains power supply connected to the laundry treating machine 10. The control unit 52 and/or the inverter control device 24 control the electric motor 22 on the basis of at least one operating parameter. Said operating parameter depends on the detected frequency of the mains power supply.

Additionally, the control unit 52 controls further electric and/or electronic components on the basis of at least one operating parameter depending on the detected frequency of the mains power supply. The further electric and/or electronic components may be provided for controlling, activating and/or deactivating functions of the laundry treating process. Said further electric and/or electronic components may also be provided for controlling, activating and/or deactivating one or more detection devices and/or electronic diagnostic devices of the laundry treating machine 10. For example, in order to let a diagnostic device monitoring the operation of a power board perform a detection of mains voltage supply at a higher (or lower) peak of the sinusoidal course of said mains voltage supply over time so as to reduce detection errors, the detection activation of such diagnostic device has to be done after a time period Δt has elapsed from the voltage zero-crossing instant. Since said time period Δt depends from the main power frequency, and it decreases when the mains power frequency increases, it is clear that the operating parameter (in this case the time period Δt) of the diagnostic device has to be set on the appropriate value in accordance to the mains power supply frequency that has been detected by the control unit 52. If such operating parameter is not changed so as to be synchronised with the actual mains power supply frequency powering the laundry treating appliance, the operation of the latter would be negatively influenced or even impossible to be carried out.
An analogous set-up of operating parameters depending on the mains power supply frequency has to be performed for controlling the electric motor, for example by adjusting the activation of the relays or other electronic components turning on/off the motor.

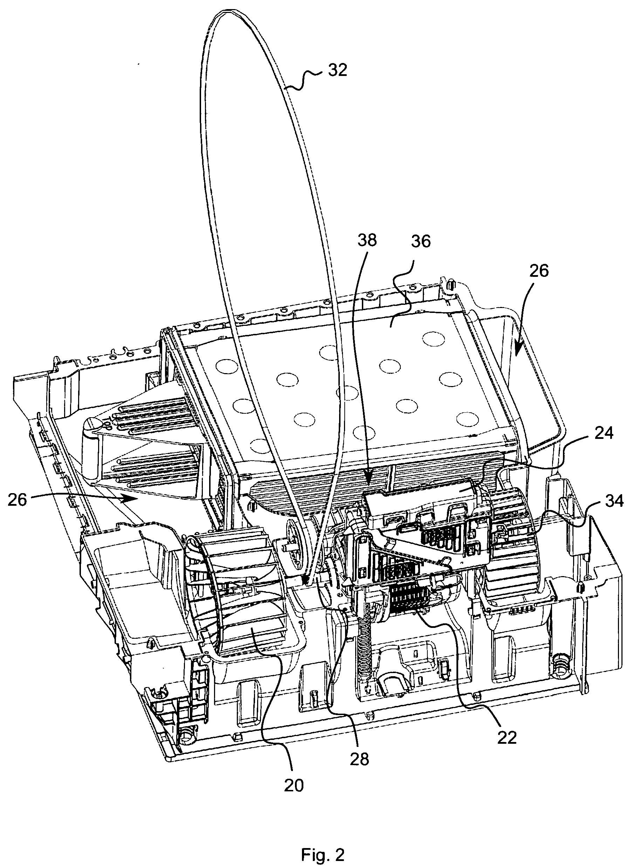

FIG 2 illustrates a perspective view of the basement portion 12 of the laundry treatment machine 10 according to a second embodiment of the present invention. The laundry treatment machine 10 according to the second embodiment is a condense-type laundry dryer. The basement portion 12 forms the lower part of the laundry treatment machine 10, so that the basement portion 12 is arranged below the laundry drum 40.

The laundry treatment machine 10 of the condense-type includes a heating device, a cooling fan 34, an air-to-air heat exchanger 36 and an open cooling air circuit 38 instead of the first air-to-refrigerant heat exchanger 14, the second air-to-refrigerant heat exchanger 16 and the heat pump compressor 18 of the first embodiment in FIG 1. The air-to-air heat exchanger 36 allows a heat exchange between the drying air stream in the air stream channel 26 and another air stream in the open cooling air circuit 38. Said open cooling air circuit 38 is provided for cooling the air-to-air heat exchanger 36. The air-to-air heat exchanger 36 acts as a condenser. The open cooling air circuit 38 is driven by a cooling air fan 34. The heating device is preferably an electric heater and provided in the air stream channel 26 for heating up the air stream in the air stream channel 26 after it has been dehumidified.

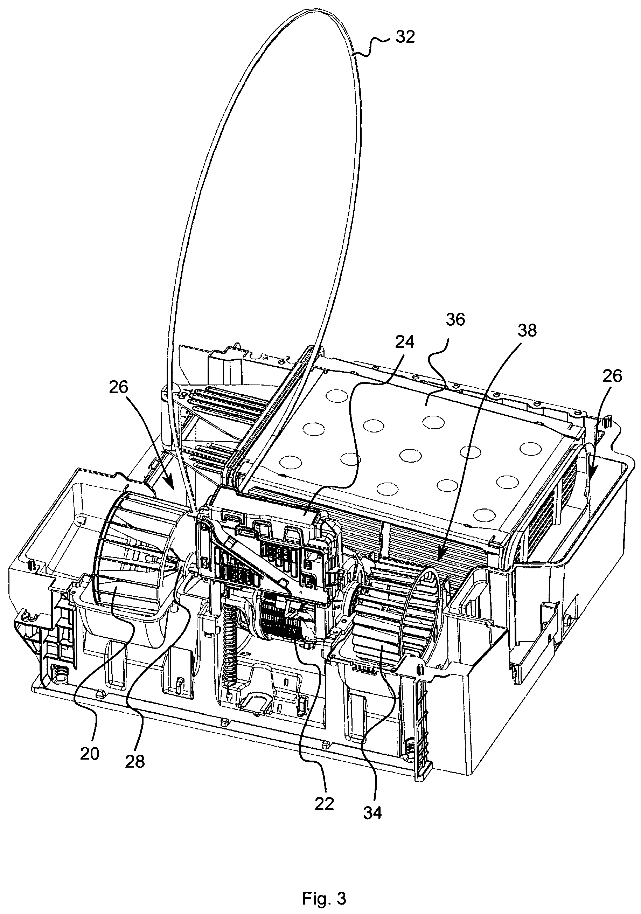

FIG 3 illustrates another perspective view of the basement portion 12 of the laundry treatment machine 10 according to the second embodiment of the present invention. FIG 3 clarifies the positions of the components in the basement portion 12 of the condense-type laundry dryer.

In particular, FIG 3 clarifies the arrangement of the air stream channel 26 and the open cooling air circuit 38. The air stream channel 26 and the open cooling air circuit 38 penetrate perpendicular to each other the air-to-air heat exchanger 36. The air stream channel 26 is driven by the air stream fan 20. In a similar way, the open cooling air circuit 38 is driven by the cooling air fan 34.

The electric motor 22 is also connected to the first shaft 28 and to the second shaft 30. The first shaft 28 and the second shaft 30 are arranged on opposite sides of said electric motor 22. The first shaft 28 is provided for driving the endless belt 32 enclosing the laundry drum 40. Further, the first shaft 28 is directly connected to the air stream fan 20 arranged in the air stream channel 26. The second shaft 30 is directly connected to the centre of the cooling air fan 34 arranged in the open cooling air circuit 38. Thus, the electric motor 22 drives the laundry drum 40, the air stream fan 20 and the cooling air fan 34. The inverter control device 24 controls the rotation speed of the electric motor 22, wherein the inverter control device 24 is controlled again by the control unit 52 mentioned above, which is not explicitly shown in FIG 2 and FIG 3.

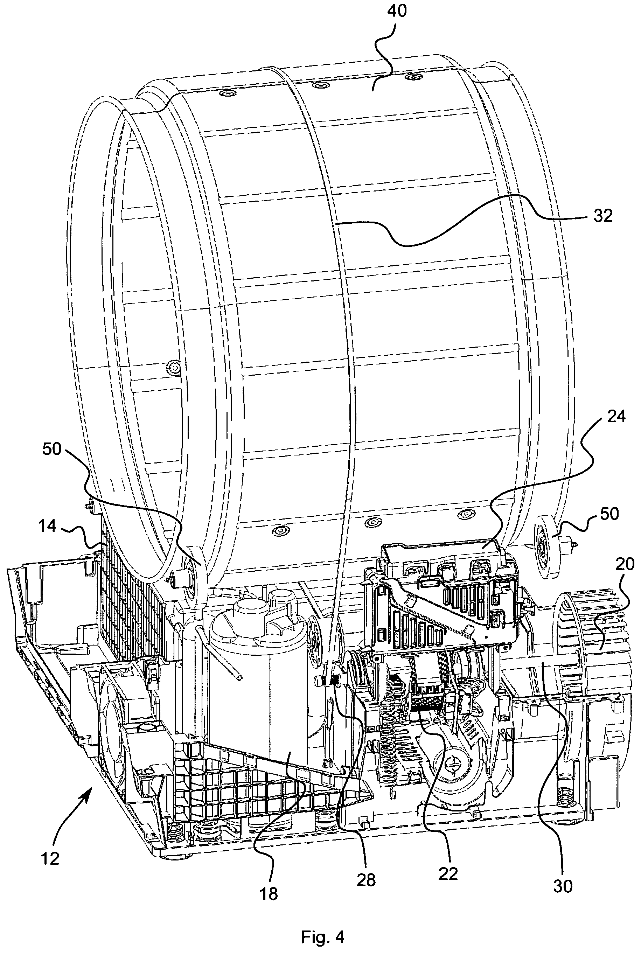

FIG 4 illustrates a perspective view of the basement portion 12 with the laundry drum 40 of the laundry treatment machine 10 according to the first embodiment of the present invention. The laundry drum 40 is arranged above the basement portion 12 shown in FIG 1. The endless belt drive 32 encloses the laundry drum 40 and the first shaft 28. The laundry drum 40 is supported by four rollers 50.

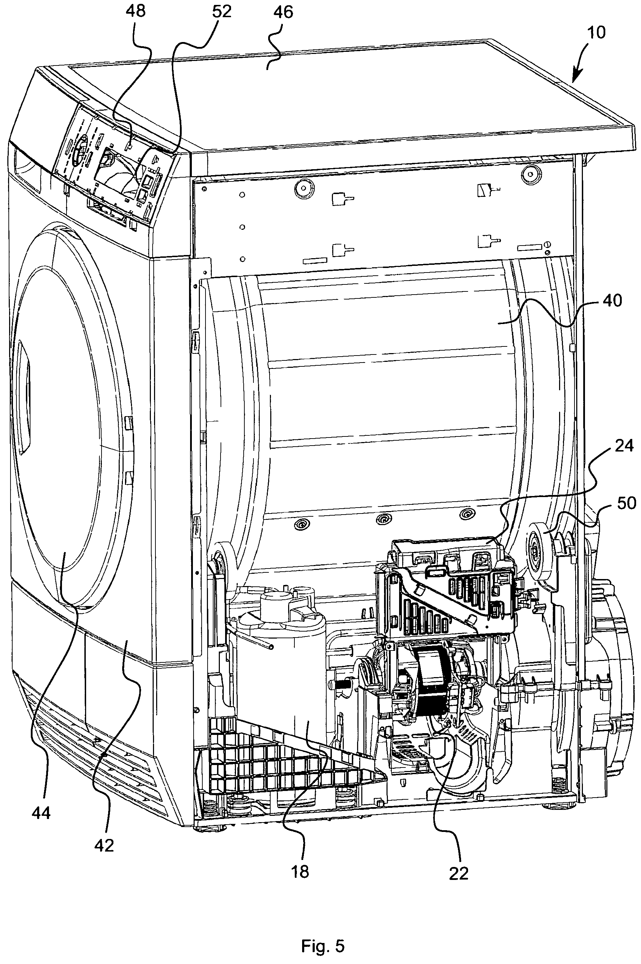

FIG 5 illustrates a perspective view of the laundry treatment machine 10 with an open side wall according to the first embodiment of the present invention. A front panel 42 is arranged at the front side of the laundry treatment machine 10. A front door 44 is arranged in the centre of said front panel 42. The front door 44 allows an access to the interior of the laundry drum 40. A top panel 46 is arranged on the top side of the laundry treatment machine 10. A user interface 48 is arranged at the front side of the laundry treatment machine 10 and above the front panel 42. The control unit 52 is arranged besides the user interface 48.

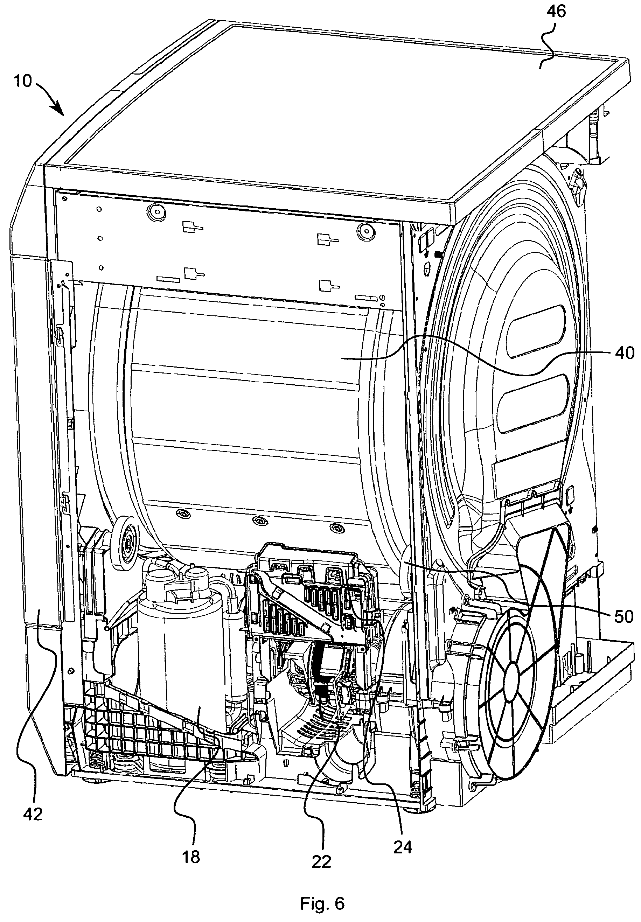

FIG 6 illustrates another perspective view of the laundry treatment machine 10 with the open side wall according to the first embodiment of the present invention. The combination of FIG 5 and FIG 6 clarify the arrangement of the components.

The present invention allows the adaption of the relevant parameters for operating the laundry treating machine 10 to the detected frequency of the mains power supply. For instance, the inventive laundry treating machine may be provided for the mains power supply frequencies of 50 Hz and also 60 Hz. The present invention allows an easy adaption of the same laundry treating machine to mains power supplies in different world areas. The control unit 52 and/or the inverter control device 24 may be realized by low complexity and by low costs.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention as claimed. All such changes and modifications are intended to be included within the scope of the invention as defined by the appended claims.

### List of reference numerals

- 10: laundry treating machine
- 12: basement portion
- 14: first air-to-refrigerant heat exchanger
- 16: second air-to-refrigerant heat exchanger
- 18: heat pump compressor
- 20: air stream fan
- 22: electric motor
- 24: inverter control device
- 26: air stream channel
- 28: first shaft
- 30: second shaft
- 32: endless belt
- 34: cooling air fan
- 36: air-to-air heat exchanger
- 38: open cooling air circuit
- 40: laundry drum
- 42: front panel
- 44: front door
- 46: top panel
- 48: user interface
- 50: roller
- 52: control unit

## Claims

1. A laundry treating machine (10) comprising at least one electric motor (22) and at least one inverter control device (24) for controlling the rotational speed of said electric motor (22), wherein the electric motor (22) is provided for driving a laundry drum (40), an air stream fan (20), a cooling air fan (34) and/or a heat pump compressor (18), and wherein the inverter control device (24) is controlled again by a control unit (52) of the laundry treating machine (10),
**characterized in that**
the control unit (52) comprises a detection device for detecting the frequency of a mains power supply connected to the laundry treating machine (10), wherein the control unit (52) and/or the inverter control device (24) control the electric motor (22) on the basis of one or more operating parameters depending on the detected frequency of the mains power supply.

2. The laundry treating machine according to claim 1,
**characterized in that**
the control unit (52) controls further electric and/or electronic components on the basis of one or more operating parameters depending on the detected frequency of the mains power supply.

3. The laundry treating machine according to claim 2,
**characterized in that**
the further electric and/or electronic components are provided for controlling, activating and/or deactivating functions of the laundry treating process.

4. The laundry treating machine according to claims 2 or 3,
**characterized in that**
the further electric and/or electronic components are provided for controlling, activating and/or deactivating one or more detection devices and/or electronic diagnostic devices of the laundry treating machine (10).

5. The laundry treating machine according to any one of the preceding claims,
**characterized in that**
the control unit (52) comprises at least one memory device, in which at least one program and/or data base are stored or storable, wherein said program and/or data base represent one or more correlations between the operating parameters and the frequency of the mains power supply.

6. The laundry treating machine according to claim 5,
**characterized in that**
the memory device is programmable by a manufacturer and/or installer of the laundry treating machine (10).

7. The laundry treating machine according to any one of the preceding claims,
**characterized in that**
the laundry treating machine (10) is activated by the control unit (52) only, if the operating parameters are suitable for the detected frequency of the mains power supply.

8. The laundry treating machine according to any one of the preceding claims,
**characterized in that**
the control unit (52) is programmed or programmable for recognizing the actually detected frequency of the mains power supply and for adjusting the operational parameters according to the detected frequency of the mains power supply.

9. The laundry treating machine according to any one of the preceding claims,
**characterized in that**
the control unit (52) is provided for adjusting the operational parameters according to a range between 50 Hz and 60 Hz for the detected frequency of the mains power supply.

10. The laundry treating machine according to any one of the preceding claims,
**characterized in that**
the control unit (52) is an integrated part of an electronic power board being in signal communication with a user interface (48) of the laundry treating machine (10).

11. The laundry treating machine according to any one of the preceding claims,
**characterized in that**
the control unit (52) is provided for communicating a reference rotational speed signal to the inverter control device (24).

12. The laundry treating machine according to one of claims 8 or 9,
**characterized in that**
the laundry treating machine (10) includes at least one optical device for indicating the detected frequency of the mains power supply and/or the adjusted operating parameters.

13. The laundry treating machine according to any one of the preceding claims,
**characterized in that**
the electric motor (22) is provided for simultaneous driving the laundry drum (40) and at least one of said fans (20, 34).

14. The laundry treating machine according to any one of the preceding claims,
**characterized in that**
the laundry treating machine (10) is a laundry dryer including a heat pump system.

15. The laundry treating machine according to any one of the claims 1 to 13,
**characterized in that**
the laundry treating machine (10) is a condense-type laundry dryer.

## Patentansprüche

1. Wäschebehandlungsmaschine (10), die wenigstens einen Elektromotor (22) und wenigstens eine Wechselrichter-Steuervorrichtung (24) zum Steuern der Drehzahl des Elektromotors (22) umfasst, wobei der Elektromotor (22) zum Antreiben einer Wäschetrommel (40), eines Luftstromgebläses (20), eines Kühlluftgebläses (34) und/oder eines Wärmepumpenkompressors (18) vorgesehen ist und wobei die Wechselrichter-Steuervorrichtung (24) ihrerseits durch eine Steuereinheit (52) der Wäschebehandlungsmaschine (10) gesteuert wird,
**dadurch gekennzeichnet, dass**
die Steuereinheit (52) eine Detektionsvorrichtung zum Detektieren der Frequenz eines Versorgungsnetzes, das mit der Wäschebehandlungsmaschine (10) verbunden ist, umfasst, wobei die Steuereinheit (52) und/oder die Wechselrichter-Steuervorrichtung (24) den Elektromotor (22) anhand eines oder mehrerer Betriebsparameter abhängig von der detektierten Frequenz des Versorgungsnetzes steuert.

2. Wäschebehandlungsmaschine nach Anspruch 1,
**dadurch gekennzeichnet, dass**
die Steuereinheit (52) weitere elektrische und/oder elektronische Bestandteile auf Basis eines oder mehrerer Betriebsparameter abhängig von der detektierten Frequenz des Versorgungsnetzes steuert.

3. Wäschebehandlungsmaschine nach Anspruch 2,
**dadurch gekennzeichnet, dass**
die weiteren elektrischen und/oder elektronischen Bestandteile zum Steuern, Einschalten und/oder Ausschalten von Funktionen des Wäschebehandlungsverfahrens vorgesehen sind.

4. Wäschebehandlungsmaschine nach Anspruch 2 oder 3,
**dadurch gekennzeichnet, dass**
die weiteren elektrischen und/oder elektronischen Bestandteile zum Steuern, Einschalten und/oder Ausschalten einer oder mehrerer Detektionsvorrichtungen und/oder elektronischer Diagnosevorrichtungen der Wäschebehandlungsmaschine (10) vorgesehen sind.

5. Wäschebehandlungsmaschine nach einem der vorhergehenden Ansprüche,
**dadurch gekennzeichnet, dass**
die Steuereinheit (52) wenigstens eine Speichervorrichtung umfasst, in der wenigstens ein Programm und/oder eine Datenbank gespeichert sind oder gespeichert werden kann, wobei das Programm und/oder die Datenbank eine oder mehrere Beziehungen zwischen den Betriebsparametern und der Frequenz des Versorgungsnetzes repräsentieren.

6. Wäschebehandlungsmaschine nach Anspruch 5,
**dadurch gekennzeichnet, dass**
die Speichervorrichtung durch einen Hersteller und/oder Installateur der Wäschebehandlungsmaschine (10) programmiert werden kann.

7. Wäschebehandlungsmaschine nach einem der vorhergehenden Ansprüche,
**dadurch gekennzeichnet, dass**
die Wäschebehandlungsmaschine (10) durch die Steuereinheit (52) nur dann eingeschaltet wird, wenn die Betriebsparameter für die detektierte Frequenz des Versorgungsnetzes geeignet sind.

8. Wäschebehandlungsmaschine nach einem der vorhergehenden Ansprüche,
**dadurch gekennzeichnet, dass**
die Steuereinheit (52) zum Erkennen der tatsächlich detektierten Frequenz des Versorgungsnetzes und zum Einstellen der Betriebsparameter in Übereinstimmung mit der detektierten Frequenz des Versorgungsnetzes programmiert ist oder programmiert werden kann.

9. Wäschebehandlungsmaschine nach einem der vorhergehenden Ansprüche,
**dadurch gekennzeichnet, dass**
die Steuereinheit (52) zum Einstellen der Betriebsparameter in Übereinstimmung mit einem Bereich zwischen 50 Hz und 60 Hz für die detektierte Frequenz des Versorgungsnetzes vorgesehen ist.

10. Wäschebehandlungsmaschine nach einem der vorhergehenden Ansprüche,
**dadurch gekennzeichnet, dass**
die Steuereinheit (52) ein eingebautes Bestandteil einer elektronischen Netzteilkarte ist, die mit einer Anwenderschnittstelle (48) der Wäschebehandlungsmaschine (10) in Signalkommunikation ist.

11. Wäschebehandlungsmaschine nach einem der vorhergehenden Ansprüche,
**dadurch gekennzeichnet, dass**
die Steuereinheit (52) zur Kommunikation eines Bezugsdrehzahlsignals an die Wechselrichter-Steuervorrichtung (24) vorgesehen ist.

12. Wäschebehandlungsmaschine nach einem der Ansprüche 8 oder 9,
**dadurch gekennzeichnet, dass**
die Wäschebehandlungsmaschine (10) wenigstens eine optische Vorrichtung zum Anzeigen der detektierten Frequenz des Versorgungsnetzes und/oder der eingestellten Betriebsparameter umfasst.

13. Wäschebehandlungsmaschine nach einem der vorhergehenden Ansprüche,
**dadurch gekennzeichnet, dass**
der Elektromotor (22) zum gleichzeitigen Antreiben der Wäschetrommel (40) und wenigstens eines der Gebläse (20, 34) vorgesehen ist.

14. Wäschebehandlungsmaschine nach einem der vorhergehenden Ansprüche,
**dadurch gekennzeichnet, dass**
die Wäschebehandlungsmaschine (10) ein Wäschetrockner ist, der ein Wärmepumpensystem umfasst.

15. Wäschebehandlungsmaschine nach einem der Ansprüche 1 bis 13,
**dadurch gekennzeichnet, dass**
die Wäschebehandlungsmaschine (10) ein Kondensationswäschetrockner ist.

## Revendications

1. Machine (10) de traitement du linge, comprenant au moins un moteur électrique (22) et au moins un dispositif (24) de commande d'onduleur destiné à commander la vitesse de rotation dudit moteur électrique (22), lequel moteur électrique (22) sert à entraîner un tambour à linge (40), un ventilateur à flux d'air (20), un ventilateur à air de refroidissement (34) et/ou un compresseur (18) de pompe à chaleur, et lequel dispositif (24) de commande d'onduleur est lui-même commandé par une unité de commande (52) de la machine (10) de traitement du linge,
**caractérisée en ce que**
l'unité de commande (52) comprend un dispositif de détection destiné à détecter la fréquence d'une alimentation électrique secteur raccordée à la machine (10) de traitement du linge, laquelle unité de commande (52) et/ou lequel dispositif (24) de commande d'onduleur commandent le moteur électrique (22) sur la base d'un ou de plusieurs paramètres de fonctionnement qui dépendent de la fréquence détectée de l'alimentation électrique secteur.

2. Machine de traitement du linge selon la revendication 1,
**caractérisée en ce que**
l'unité de commande (52) commande des composants électriques et/ou électroniques additionnels sur la base d'un ou de plusieurs paramètres de fonctionnement qui dépendent de la fréquence détectée de l'alimentation électrique secteur.

3. Machine de traitement du linge selon la revendication 2,
**caractérisée en ce que**
les composants électriques et/ou électroniques additionnels servent à commander, activer et/ou désactiver des fonctions du processus de traitement du linge.

4. Machine de traitement du linge selon les revendications 2 ou 3,
**caractérisée en ce que**
les composants électriques et/ou électroniques additionnels servent à commander, activer et/ou désactiver un ou plusieurs dispositifs de détection et/ou dispositifs de diagnostic électroniques de la machine (10) de traitement du linge.

5. Machine de traitement du linge selon l'une quelconque des revendications précédentes,
**caractérisée en ce que**
l'unité de commande (52) comprend au moins un dispositif de mémoire, dans lequel au moins un programme et/ou base de données sont enregistrés ou enregistrables, lesquels programme et/ou base de données représentent une ou plusieurs corrélations entre les paramètres de fonctionnement et la fréquence de l'alimentation électrique secteur.

6. Machine de traitement du linge selon la revendication 5,
**caractérisée en ce que**
le dispositif de mémoire est programmable par un fabricant et/ou un installateur de la machine (10) de traitement du linge.

7. Machine de traitement du linge selon l'une quelconque des revendications précédentes,
**caractérisée en ce que**
la machine (10) de traitement du linge est activée par l'unité de commande (52) uniquement si les paramètres de fonctionnement sont adaptés à la fréquence détectée de l'alimentation électrique secteur.

8. Machine de traitement du linge selon l'une quelconque des revendications précédentes,
**caractérisée en ce que**
l'unité de commande (52) est programmée ou programmable en vue de reconnaître la fréquence effectivement détectée de l'alimentation électrique secteur et de régler les paramètres de fonctionnement conformément à la fréquence détectée de l'alimentation électrique secteur.

9. Machine de traitement du linge selon l'une quelconque des revendications précédentes,
**caractérisée en ce que**
l'unité de commande (52) sert à régler les paramètres de fonctionnement conformément à une plage allant de 50 Hz à 60 Hz pour la fréquence détectée de l'alimentation électrique secteur.

10. Machine de traitement du linge selon l'une quelconque des revendications précédentes,
**caractérisée en ce que**
l'unité de commande (52) constitue une pièce intégrée d'une carte d'alimentation électronique en communication par signal avec une interface utilisateur (48) de la machine (10) de traitement du linge.

11. Machine de traitement du linge selon l'une quelconque des revendications précédentes,
**caractérisée en ce que**
l'unité de commande (52) sert à communiquer un signal de vitesse de rotation de référence au dispositif (24) de commande d'onduleur.

12. Machine de traitement du linge selon l'une des revendications 8 ou 9,
**caractérisée en ce que**
la machine (10) de traitement du linge comporte au moins un dispositif optique destiné à indiquer la fréquence détectée de l'alimentation électrique secteur et/ou les paramètres de fonctionnement réglés.

13. Machine de traitement du linge selon l'une quelconque des revendications précédentes,
**caractérisée en ce que**
le moteur électrique (22) sert à entraîner simultanément le tambour à linge (40) et au moins un desdits ventilateurs (20, 34).

14. Machine de traitement du linge selon l'une quelconque des revendications précédentes,
**caractérisée en ce que**
la machine (10) de traitement du linge est un sèche-linge comportant un système de pompe à chaleur.

15. Machine de traitement du linge selon l'une quelconque des revendications 1 à 13,
**caractérisée en ce que**
la machine (10) de traitement du linge est un sèche-linge du type à condensation.
